# EUROPEAN PATENT APPLICATION

(11) **EP 4 835 997 A1**
(43) Date of publication of application: **04.11.2026**
(21) Application number: 26174251.4
(22) Date of filing: 23.04.2026
(51) Int. Cl.: H01M 4/36, H01M 4/38, H01M 4/62, H01M 4/134, H01M 4/1395, H01M 10/0525, H01M 4/02

(54) **ACTIVE MATERIAL FOR NEGATIVE ELECTRODE OF RECHARGEABLE LITHIUM BATTERY, METHOD OF PREPARING THE ACTIVE MATERIAL AND RECHARGEABLE LITHIUM BATTERY INCLUDING THE ACTIVE MATERIAL**

(30) Priority: 30.04.2025 KR 20250057549
(71) Applicant: SAMSUNG SDI CO., LTD., Yongin-si, Gyeonggi-do 17084 (KR)
(72) Inventor: PARK, Sun Il, 16678 Suwon-si, Gyeonggi-do (KR); SOH, Hyun, 16678 Suwon-si, Gyeonggi-do (KR); LEE, Sung Hoon, 16678 Suwon-si, Gyeonggi-do (KR)
(74) Representative: Michalski Hüttermann & Partner mbB

(57) **Abstract**

A negative electrode active material includes a silicon-carbon composite including silicon nanoparticles and amorphous carbon. The silicon-carbon composite has an oxygen content of 10% or less. The silicon nanoparticles have a D50 average size of 10 to 200 nm.

## Description

### CROSS-REFERENCE TO RELATED APPLICATION

The present application claims priority to and the benefit of Korean Patent Application No. 10-2025-0057549, filed on April 30, 2025, in the Korean Intellectual Property Office.

### BACKGROUND

### 1. Field of the Disclosure

The present disclosure relates to a negative electrode active material for a rechargeable lithium battery, a method of preparing the active material, and a rechargeable lithium battery including the active material.

### 2. Discussion of Related Art

With the rapid spread of electronic devices using batteries, such as mobile phones, notebook computers, and electric vehicles, the demand for secondary batteries having high energy density and high capacity has rapidly increased. As a result, research and development for improving the performance of rechargeable lithium batteries has been conducted.

A rechargeable lithium battery includes a positive electrode and a negative electrode that contain an active material capable of the intercalation and deintercalation of lithium ions. A rechargeable lithium battery produces electrical energy by oxidation and reduction reactions when the lithium ions are intercalated into and deintercalated from the positive electrode and the negative electrode.

### SUMMARY OF THE DISCLOSURE

One embodiment is directed to providing a negative electrode active material for a rechargeable lithium battery, with the negative electrode active material having a low oxygen concentration.

Another embodiment is directed to providing a method of preparing a negative electrode active material for a rechargeable lithium battery, with the method having a shortened milling time of silicon precursor particles.

One embodiment provides a negative electrode active material for a rechargeable lithium battery, which includes a silicon-carbon composite including silicon nanoparticles and amorphous carbon, wherein the silicon-carbon composite has an oxygen content of 10wt% or less, and the silicon nanoparticles have a D50 average size of 10 to 200 nm.

Another embodiment provides a method of preparing a negative electrode active material for a rechargeable lithium battery, which includes preparing silicon nanoparticles and mixing the silicon nanoparticles or an assembly of the silicon nanoparticles with an amorphous carbon precursor and performing thermal treatment, wherein the preparation of silicon nanoparticles includes milling silicon precursor particles in a solvent having a viscosity of 0.1 to 0.5 mPa·s at 25 °C.

Still another embodiment provides a rechargeable lithium battery that includes a negative electrode including the negative electrode active material for a rechargeable lithium battery and a positive electrode.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings.

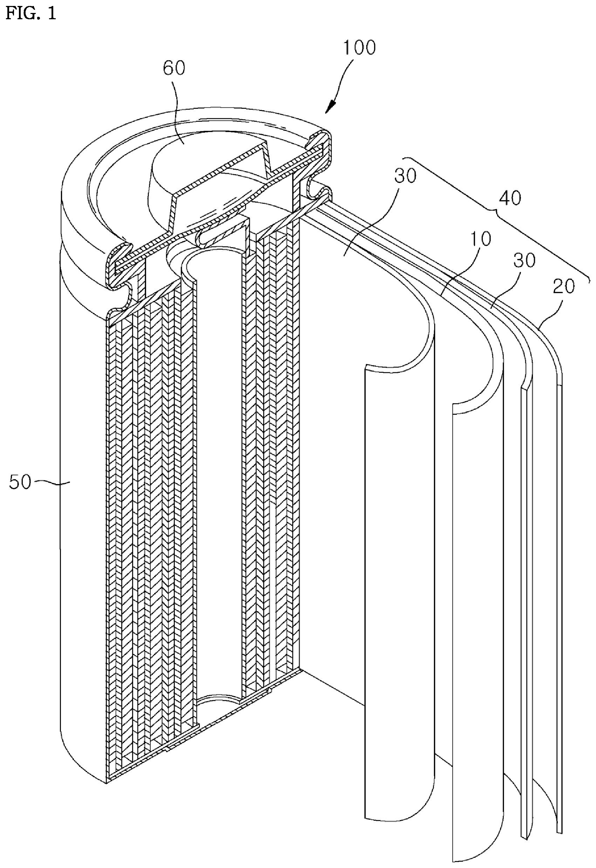

FIGS. 1 to 4 are cross-sectional views schematically showing rechargeable lithium batteries according to embodiments.

### DETAILED DESCRIPTION OF EXEMPLARY EMBODIMENTS

Hereinafter, embodiments of the present disclosure will be described in detail.

Unless otherwise specified herein, when a part such as a layer, a film, a region, or a plate is described as being "on" another part, this includes not only a case where the part is "directly on" the other part, but also a case where another part is present therebetween.

Unless particularly stated otherwise, an expression in the singular may also include the plural. Additionally, unless otherwise specified, "A or B" may mean "including A, including B, or including A and B".

In the specification, "combination thereof" may mean a mixture, laminate, composite, copolymer, alloy, blend, and reaction product of components.

In the specification, "D50 particle size" and "D50 average size" refer to an average particle size indicating the size of particles with a cumulative volume of 50 vol% in the particle size distribution. Particle size distribution may be measured by a method known to those of ordinary skill in the art. For example, the particle size distribution may be measured using a particle size analyzer, or by transmission electron microscopy or scanning electron microscopy. As another method, by using a measuring device that uses dynamic light-scattering, particle size may be measured using dynamic light-scattering, the number of particles may be counted for each particle size range through data analysis, and the D50 value may be obtained by being calculated from the results. Alternatively, the number of particles may be measured using a laser diffraction method. When measuring by laser diffraction, particles to be measured may be dispersed in a dispersion medium, irradiated with approximately 28 kHz ultrasonic waves at an output of 60 W by introducing it into a commercially available laser diffraction particle size measuring device (e.g., Microtrac MT 3000), and the D50 average size may be calculated based on 50% of the particle size distribution using the measuring device.

Herein, when a above particle is spherical, the size may mean the diameter.

The size may be measured using a particle size analyzer (LS 13 320 XR from Beckman Coulter, Inc.).

According to an embodiment, there is provided a method of preparing a silicon-carbon composite as a negative electrode active material for a rechargeable lithium battery. The preparation method includes milling silicon precursor particles to prepare silicon nanoparticles. In the preparation method, only a short milling time for silicon precursor particles is needed to prepare silicon nanoparticles. Thus, the preparation method not only has excellent processability and economic efficiency but is also capable of preparing a silicon-carbon composite having a low oxygen concentration. When the concentration of oxygen in the negative electrode active material is high, lithium ions may react with oxygen to lower battery capacity during charging and discharging of a battery, and, as a result, risks fire or explosion of battery may increase. Oxygen in the negative electrode active material may be incorporated into the negative electrode active material at several stages of the preparation process of the negative electrode active material, but is most likely incorporated when preparing silicon nanoparticles by milling silicon precursor particles.

The preparation method includes preparing silicon nanoparticles, mixing the silicon nanoparticles or an assembly of the silicon nanoparticles with an amorphous carbon precursor, and performing thermal treatment. The preparation of silicon nanoparticles includes milling silicon precursor particles in a solvent having a viscosity of 0.1 to 0.5 mPa·s at 25 °C.

Hereinafter, the preparation method will be described in detail.

### Preparation of silicon nanoparticles

Silicon nanoparticles are prepared by milling silicon precursor particles in a solvent.

The silicon precursor particles may have a D50 average size of several micrometers. For example, the silicon precursor particles may have a D50 average size of 10 µm or less, such as 5 µm or less or 1 µm or less. The silicon precursor particles may be composed of only silicon.

In the preparation method, the viscosity at 25 °C of the solvent used in the milling of silicon precursor particles is adjusted. Here, the viscosity of the solvent is a value evaluated using a Brookfield rotational viscometer. The solvent has a viscosity, for example, of 0.1 to 0.5 mPa·s at 25 °C. When the viscosity at 25 °C of a solvent exceeds 0.5 mPa·s, the excessively high viscosity of the solvent may reduce the number of collisions between the silicon precursor particles and milling balls in the milling of silicon precursor particles and thus increase a milling time, thereby increasing the oxygen concentration of a negative electrode active material. In more specific examples, the solvent may have a viscosity of 0.1 to 0.4 mPa·s at 25 °C.

The solvent may be an oxygen-free solvent that does not contain oxygen. The oxygen-free solvent may further lower the content of oxygen that is included in silicon nanoparticles during the milling of silicon precursor particles.

In a specific example, the solvent may be n-hexane. n-Hexane increases the fluidity of milling balls, particularly, zirconium balls, during milling to increase the number of collisions between the silicon precursor particles and milling balls. Thus, the milling time may be significantly shortened. In addition, n-hexane allows the silicon precursor particles to agglomerate well to increase the number of collisions with milling balls, thereby increasing the milling efficiency of the silicon precursor particles. Additionally, n-hexane may allow the silicon nanoparticles to agglomerate after the milling is completed, thereby making it possible to recycle components from the process. Further, n-hexane may be advantageous in the preparation of the negative electrode active material described below.

The milling may be performed after mixing the silicon precursor particles and milling balls in the solvent. In a specific example, the solvent and the silicon precursor particles may be included in a weight ratio of 70:30 to 95:5 (solvent : silicon precursor particles) based on a total of 100 parts by weight of the solvent and silicon precursor particles. In this range, the silicon nanoparticles can be efficiently prepared. In some examples, the weight ratio of solvent to silicon precursor particles may be 80:20 to 95:5, 85:15 to 95:5, or 90:10.

The milling may be performed at 20 to 35 °C, for example, 25 to 35 °C. In these ranges, the preparation efficiency of silicon nanoparticles having a desired average particle diameter D50 can be high.

The milling may be performed for 10 to 25 hours, for example, 10 to 20 hours or 10 to 16 hours. In these ranges, the efficiency of preparation of the silicon nanoparticles having a desired D50 average size can be high.

The silicon nanoparticles have a D50 average size of 10 to 200 nm. In this range, it can be advantageous for providing a negative electrode active material that implements excellent battery capacity. For example, the silicon nanoparticles may have an average size D50 of 20 to 200 nm, 50 to 150 nm, for example, 50 to 100 nm.

In a specific example, the silicon nanoparticles may be primary particles, e.g., single particles that are not agglomerations of particles.

The silicon nanoparticles may be used in the preparation of a silicon precursor described below as is or may also be used in the form of a dispersion including the silicon nanoparticles (silicon nanoparticle dispersion). The silicon nanoparticle dispersion may include a solvent that is easily volatilized without oxidizing the silicon nanoparticles. For example, as discussed above, the solvent may be n-hexane. The concentration of the silicon nanoparticles in the silicon nanoparticle dispersion may be 10 to 30 wt%.

### Thermal treatment

The silicon nanoparticles or an assembly of the silicon nanoparticles are mixed with an amorphous carbon precursor and thermally treated to prepare a silicon-carbon composite.

The silicon-carbon composite may be prepared by mixing the silicon nanoparticles and the amorphous carbon precursor and performing the thermal treatment. Alternatively, the silicon-carbon composite may be prepared by mixing an assembly of the silicon nanoparticles with the amorphous carbon precursor and performing the thermal treatment. The assembly of the silicon nanoparticles may be prepared by spray-drying the silicon nanoparticle dispersion.

Through the spray drying, the silicon nanoparticles may be assembled into secondary particles with a micrometer size. The secondary particles may include pores, for example, gaps between the silicon nanoparticles.

The spray drying may adjust the sphericity of the prepared negative electrode active material by adjusting the type of nozzle used for the spraying and the atmosphere in which the spraying is conducted. It may be appropriate to use, for example, a two-fluid nozzle that can form fine particles by mixing two fluids of liquid and gas. When a two-fluid nozzle is used, fine spherical particles may be formed. Because the size of the formed particles is small, an additional pulverization process is not required and, thus, the spherical shapes of the particles may be maintained. A disk-type nozzle that sprays while rotating may not be appropriate because large particles are formed and an additional pulverization process is required due to the large particle size, which may result in particles of various shapes such as a sphere, an ellipse, a donut, and the like being formed.

The spray drying may be performed under an nitrogen atmosphere, for example, by flowing (blowing) nitrogen at a flow rate of 30 L/min to 50 L/min or 30 L/min to 40 L/min. When the flow rate of nitrogen is within these ranges, the spray drying can form spherical microparticles having an appropriate size. A flow rate of nitrogen that is less than 30 L/min may not be appropriate because the sprayed products agglomerate and, thus, the size of prepared particles increases. A flow rate of nitrogen that exceeds 50 L/min may have a problem in which the size of prepared particles is too small and a lot of fine powder is generated.

The spray drying may be performed at 50 °C to 170 °C. When the spray drying is performed in this temperature range, micro-sized spherical Si particles can be sufficiently dried through instantaneous volatilization due to the temperature being sufficiently higher than the boiling point of a solvent. In some examples, the spray drying may be performed at 50 °C to 150°C.

The amorphous carbon precursor may be a polyimide-based resin, furan resin, phenol resin, polyvinyl alcohol resin, poly(meth)acrylic acid resin, polyurethane resin, cellulose resin, epoxy resin, polystyrene resin, petroleum-based pitch, coal-based pitch, green coke, mesophase pitch, coal-based oil, petroleum-based heavy oil, coke, or a combination thereof.

The silicon nanoparticles or assembly of the silicon nanoparticles and the amorphous carbon precursor may be included in a weight ratio of 20:80 to 99:1 (the silicon nanoparticles or assembly of the silicon nanoparticles : the amorphous carbon precursor) based on a total of 100 parts by weight. In this weight ratio range, a negative electrode active material that has excellent battery capacity can be prepared. For example, the weight ratio may be 50:50 to 99:1 or 60:40 to 96:4.

The thermal treatment may be performed at 400 °C to 1200 °C or 700 °C to 1000 °C. When the thermal treatment is performed in this temperature range, a negative electrode active material can maintain a spherical shape, the conductivity of a negative electrode active material can be improved by carbonization of amorphous carbon, and the initial efficiency of a battery can be improved.

The thermal treatment may be performed under a nitrogen atmosphere. As a result of the thermal treatment, the amorphous carbon precursor may be converted into amorphous carbon and included as amorphous carbon in a negative electrode active material.

The mixing with the amorphous carbon precursor and the thermal treatment may be performed one or more times. For example, the mixing with the amorphous carbon precursor and the thermal treatment may be performed two or more times.

Hereinafter, a method of performing the mixing with the amorphous carbon precursor and the thermal treatment two times will be described in detail.

### Primary mixing and thermal treatment

The silicon nanoparticles or an assembly of the silicon nanoparticles and the amorphous carbon precursor are mixed and thermally treated.

The amorphous carbon precursor may be the same as described above. For example, the amorphous carbon precursor may be mesophase pitch.

The silicon nanoparticles or an assembly of the silicon nanoparticles and the amorphous carbon precursor may be included in a weight ratio of 20:80 to 99:1 (the silicon nanoparticles or an assembly of the silicon nanoparticles : the amorphous carbon precursor) based on a total of 100 parts by weight. In this weight ratio range, a negative electrode active material that has excellent battery capacity can be prepared. For example, the weight ratio may be 50:50 to 99:1, 60:40 to 96:4, or 90:10 to 99:1.

The thermal treatment may be performed at 400 °C to 1200 °C, 700 °C to 1000 °C, or 800 °C to 1000 °C. When the thermal treatment is performed in this temperature range, a negative electrode active material can maintain a spherical shape, the conductivity of a negative electrode active material can be improved by carbonization of amorphous carbon, and the initial efficiency of a battery can be improved.

As discussed above, the thermal treatment may be performed under a nitrogen atmosphere.

### Secondary mixing and thermal treatment

The product prepared by the primary mixing and thermal treatment and the amorphous carbon precursor are mixed and thermally treated.

The amorphous carbon precursor is as described above. For example, the amorphous carbon precursor may be mesophase pitch.

The product prepared by the primary mixing and thermal treatment may be subjected to the secondary mixing with the amorphous carbon precursor and thermal treatment as is or after being pulverized.

The pulverized product prepared by the primary mixing and thermal treatment and the amorphous carbon precursor may be included in a weight ratio of 20:80 to 99.9:0.1 (the pulverized product prepared by the primary mixing and thermal treatment : the amorphous carbon precursor) based on a total of 100 parts by weight. In this weight ratio range, a negative electrode active material that provides excellent battery capacity can be prepared. In some examples, the weight ratio may be 50:50 to 99:1, 60:40 to 96:4, or 90:10 to 99.9:0.1.

The thermal treatment may be performed at 400 °C to 1200 °C, 700 °C to 1000 °C, or 800 °C to 1000 °C. When the thermal treatment is performed in these temperature range, a negative electrode active material can maintain a spherical shape, the conductivity of a negative electrode active material can be improved by carbonization of amorphous carbon, and the initial efficiency of a battery can be improved.

The thermal treatment may be performed under a nitrogen atmosphere.

### Negative electrode active material for rechargeable lithium battery

Hereinafter, a negative electrode active material for a rechargeable lithium battery will be described.

A negative electrode active material for a rechargeable lithium battery includes a silicon-carbon composite including silicon nanoparticles and amorphous carbon and has an oxygen content of 10% or less.

The negative electrode active material has an oxygen content of 10% or less. Therefore, the degree to which lithium ions react with oxygen during charging and discharging of a battery including the negative electrode active material is low. Thus, the battery capacity may increase and the risk of battery explosion may decrease when a fire occurs. In some examples, the negative electrode active material may have an oxygen content of or more than 0% and 10% or less, for example 0, 0.5, 1, 1.5, 2, 2.5, 3, 3.5, 4, 4.5, 5, 5.5, 6, 6.5, 7, 7.5, 8, 8.5, 9, 9.5, 10%.

The negative electrode active material may be prepared by the above-described method of preparing a negative electrode active material.

In a specific example, the negative electrode active material may include a core including silicon nanoparticles and amorphous carbon. An amorphous carbon coating layer may surround the core.

In a specific example, the negative electrode active material may be a two-component negative electrode active material including silicon and amorphous carbon.

An interparticle distance between the silicon nanoparticles included in the core of the negative electrode active material may be 100 nm or less, 90 nm or less, 80 nm or less, 70 nm or less, 65 nm or less, 60 nm or less, 55 nm or less, 50 nm or less, 45 nm or less, 40 nm or less, or 35 nm or less. When the interparticle distance between the silicon nanoparticles is within these ranges, the size of pores included in the core and the total pore volume can be reduced. Further, when the interparticle distance between the silicon nanoparticles falls within the above range, the volume of pores present inside the negative electrode active material can be reduced, and penetration of an electrolyte into the core during battery operation can be prevented by narrowing the interparticle distance between the silicon nanoparticles. As a result, side reactions between the electrolyte and the negative electrode active material can be suppressed to improve lifespan of a battery including the negative electrode active material.

Here, the interparticle distance between the silicon nanoparticles means the distance between the centers of the silicon nanoparticles. The interparticle distance between the silicon nanoparticles may mean the interparticle distance between 50% to 100%, for example, 60% to 100%, 70% to 100%, or 80% to 100% silicon nanoparticles of the total number of silicon nanoparticles included in the core within the above range.

The silicon nanoparticles may have a D50 average size of 10 nm to 200 nm, for example, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200 nm, 20 to 200 nm or larger than or equal to 50 nm, 60 nm, 70 nm, or 80 nm and smaller than or equal to 100 nm or 90 nm. When the D50 average size of the silicon nanoparticles is within these range, side reactions with an electrolyte are suppressed and expansion of silicon nanoparticles is reduced. Thus, initial efficiency and lifespan characteristics can be improved.

The silicon nanoparticles may have a full width at half maximum of the (111) plane of 0.3° to 7° at an X-ray diffraction angle (20) using Cu Kα radiation. As such, lifespan characteristics can be improved. The full width at half maximum of the (111) plane of the silicon nanoparticles at an X-ray diffraction angle (20) using Cu Kα radiation may be adjusted by adjusting the silicon particle size or changing the silicon nanoparticle preparation process.

The silicon nanoparticles may have an aspect ratio of 2 to 8, for example, 2 to 6. Further, the silicon nanoparticles may have a minor axis length (a) of 20 nm to 50 nm and a major axis length (b) of 50 nm to 300 nm. When the aspect ratio, major axis length (b), and minor axis length (a) of the silicon nanoparticles fall within these ranges, side reactions between the negative electrode active material and an electrolyte are suppressed and expansion of silicon nanoparticles is reduced. Thus, initial efficiency and lifespan characteristics can be improved.

The silicon nanoparticles may be included in an amount of 20 wt% to 80 wt%, 30 wt% to 70 wt%, 30 wt% to 60 wt%, or 30 wt% to 50 wt% based on the total weight of the negative electrode active material. When the amount of the silicon nanoparticles falls within the above range, battery capacity can be improved.

The amorphous carbon included in the core may be soft carbon, hard carbon, mesophase pitch carbide, calcined coke, or a combination thereof.

When the amorphous carbon is included in the core, the pore volume of the negative electrode active material is reduced and, thus, side reactions with an electrolyte may be suppressed. In addition, when the silicon nanoparticles in the negative electrode active material expand, the amorphous carbon may buffer the expansion to suppress expansion of the surrounding battery. Additionally, the amorphous carbon may serve as a binder to alleviate breakage of the negative electrode active material and thus maintain the shape of a third negative electrode active material well.

The coating layer includes amorphous carbon and may have a thickness of 1 nm to 900 nm, for example, 5 nm to 800 nm. Because of this thickness, the specific surface area of the negative electrode active material may be reduced and the inflow of an electrolyte into the negative electrode active material may be prevented. As a result, side reactions with an electrolyte may be minimized and the lifespan characteristics of a battery may be improved. The amorphous carbon included in the coating layer may be soft carbon, hard carbon, mesophase pitch carbide, calcined coke, or a combination thereof, and may be the same as or different from the amorphous carbon included in the core.

Based on the total weight of the negative electrode active material, the amorphous carbon may be included in an amount of 20 wt% to 80 wt%, for example, 20 wt% to 70 wt%, 20 wt% to 60 wt%, 20 wt% to 50 wt%, or 20 wt% to 40 wt%. When the amount of the amorphous carbon falls within these ranges, side reactions between the negative electrode active material and an electrolyte can be suppressed.

The negative electrode active material according to one embodiment may have a D50 average particle diameter of 2 µm to 15 µm, for example, 2, 3, 4, 5, 6, 7, 8, 9, 10, 11, 12, 13, 14, 15 µm, 3 µm to 13 µm or 5 µm to 10 µm. When the average particle diameter of the negative electrode active material falls within these ranges, lithium ions can easily diffuse into the negative electrode active material, and resistance and rate characteristics of a battery including the negative electrode active material can be improved. Also, an excessive increase in the specific surface area of the negative electrode active material can be suppressed to reduce side reactions with an electrolyte. The D50 average size of the negative electrode active material may be adjusted by adjusting disintegration and pulverization conditions in the preparation of the negative electrode active material.

In the negative electrode active material, a total volume of pores having a size of 200 nm or less may be 3.0 x 10⁻² cm³/g or less, for example, 2.5 x 10⁻² cm³/g or less, 2.3 x 10⁻² cm³/g or less, 2.0 x 10⁻² cm³/g or less, 1.9 x 10⁻² cm³/g or less, 1.8 x 10⁻² cm³/g or less, 1.7 x 10⁻² cm³/g or less, 1.6 x 10⁻² cm³/g or less, 1.5 x 10⁻² cm³/g or less, 1.4 x 10⁻² cm³/g or less, 1.3 x 10⁻² cm³/g or less, 1.2 x 10⁻² cm³/g or less, 1.1 x 10⁻² cm³/g or less, 1.0 x 10⁻² cm³/g or less, 0.9 x 10⁻² cm³/g or less, 0.8 x 10⁻² cm³/g or less, 0.7 x 10⁻² cm³/g or less, 0.6 x 10⁻² cm³/g or less, or 0.5 x 10⁻² cm³/g or less. In these ranges, side reactions between an electrolyte and silicon nanoparticles can be suppressed to improve initial efficiency and lifespan characteristics. The total volume of pores having a size of 200 nm or less may be quantitatively measured using a Barrett-Joyner-Halenda (BJH) analyzer.

The negative electrode active material may have a pore size of 200 nm or less, for example, 170 nm or less, 150 nm or less, 130 nm or less, 100 nm or less, or 50 nm or less. When the pore size is controlled within these range, side reactions between an electrolyte and silicon nanoparticles can be reduced, and a battery whose initial efficiency and lifespan characteristics are improved can be obtained.

The negative electrode active material may have a BET (Brunauer-Emmett-Teller) specific surface area of 10 m²/g or less. When the BET specific surface area falls within this range, side reactions with an electrolyte are suppressed and, thus, the efficiency of a battery including the negative electrode active material can be improved.

Based on a total of 100 parts by weight of the silicon nanoparticles and the amorphous carbon in the negative electrode active material, the silicon nanoparticles and the amorphous carbon may be included in a weight ratio of 80:20 to 20:80, for example, 70:30 to 30:70, 70:30 to 40:60, or 70:30 to 50:50. When the amount of the silicon nanoparticles and the amorphous carbon is within these ranges, the internal pore volume can be reduced and the amorphous carbon can be uniformly dispersed inside and on the surface of the negative electrode active material. As a result, side reactions with an electrolyte can be suppressed and the performance of the negative electrode active material can be improved.

In specific examples, the negative electrode active material may have a sphericity of 0.7 or more, for example, 0.7 or more and 1.0 or less. here, the sphericity refers to a ratio (Lb/La) of the minor axis length (Lb) to the major axis length (La) when the negative electrode active material has a spherical or elliptical shape. A sphericity of 1.0 means that the negative electrode active material has a substantially perfect spherical shape, and therefore, it is widely understood by those skilled in the art that the maximum sphericity is 1.0 and the sphericity cannot exceed 1.0. When the sphericity of the negative electrode active material is 0.7 or more, the surface area of the negative electrode active material can be reduced and, accordingly, the area of the negative electrode active material in contact with an electrolyte or the area of the negative electrode active material reacting with lithium is reduced. As a result, side reactions with an electrolyte can be reduced, reactions with lithium can also be reduced, and the active material can be uniformly expanded in a negative electrode, which thereby reduces the resulting volume expansion. In other examples, the negative electrode active material may have an elliptical or spherical cross-section.

The effects resulting from the reduction in the surface area may be more prominently exhibited when the BET specific surface area of the negative electrode active material is 10 m²/g or less, for example, 0.5 m²/g to 10 m²/g. When the BET specific surface area of the negative electrode active material is 10 m²/g or less, contact with an electrolyte is reduced to thereby suppress side reactions. Thus, this range can help improve performance and increase initial efficiency.

In sum, the negative electrode active material according to an embodiment may be an active material with reduced side reactions with an electrolyte and reduced reactions with lithium due to having a sphericity of 0.7 or more and a BET specific surface area of 10 m²/g or less.

In the negative electrode active material, the silicon nanoparticles are primary particles and may be included in the silicon-carbon composite in the form of secondary particles that are agglomerations of the primary particles, that is, one or more primary particles. Therefore, the silicon-carbon composite may include secondary particles formed by assembling Si nanoparticles.

In some embodiments, the silicon nanoparticles may have a flaky shape, a spherical shape, or the like. But the shape thereof is not limited thereto. Also, the secondary particles formed by assembling one or more primary particles may have a spherical shape.

The amorphous carbon may cover the surfaces of the secondary particles. In other words, the negative electrode active material may include a core including the silicon nanoparticles, for example, a secondary particle core formed by assembling primary particles, which are silicon nanoparticles, and amorphous carbon surrounding the core. In embodiments, the core refers to a region located inside the active material, and more specifically, a region that is surrounded by amorphous carbon and is not substantially exposed to the outside. Therefore, the core can be seen as a region located inside the amorphous carbon.

The amorphous carbon may also fill the gaps between the primary particles. When the amorphous carbon fills the gaps between the primary particles, the amorphous carbon can be seen covering the surfaces of the primary particles. As such, when the amorphous carbon fills the gaps between the primary particles, the pore volume of the negative electrode active material is reduced and, thus, side reactions with an electrolyte may be suppressed. Further, when primary particles, which are silicon nanoparticles, expand, the amorphous carbon serves to buffer the expansion. Also, the amorphous carbon that fills the gaps between the primary particles serves as a binder and thereby prevents breakage of negative electrode active material particles. As a result conductivity may be improved.

The amorphous carbon may be soft carbon, hard carbon, mesophase pitch carbide, calcined coke, or a combination thereof.

The silicon nanoparticles may have a flaky shape. In other words, the silicon nanoparticles may have a major axis and a minor axis with the major axis/minor axis ratio (e.g., the width/thickness ratio) being 5 to 20. When the major axis/minor axis ratio of the silicon particles falls within thus range, expansion of Si nanoparticles can be reduced. Thus, the initial efficiency and lifespan characteristics of a battery including the active material can be improved.

The silicon nanoparticles may have a particle diameter of 10 to 200 nm, for example, 20 to 200 nm or 20 nm to 100 nm. The particle diameter may be an average value of particle diameters. Here, the average particle diameter may refer to a D50 particle diameter measured based on a cumulative volume. As noted above, unless otherwise defined herein, the D50 average particle diameter refers to a particle diameter corresponding to a cumulative volume of 50 vol% in the particle size distribution. When the size of the Si nanoparticles falls within the above ranges, side reactions between the negative electrode active material and an electrolyte are suppressed and expansion of Si nanoparticles is reduced. Thus, the initial efficiency and lifespan characteristics of a battery including the negative electrode active material can be improved.

When the silicon nanoparticles are secondary particles formed by assembling one or more primary particles, the particle diameter of secondary particles may be 2 µm to 15 µm, for example, 5 µm to 10 µm. The particle diameter of primary particles may be 10 nm to 200 nm. When the average particle diameter of the negative electrode active material falls within these ranges, lithium ions can easily diffuse into the negative electrode active material. Further, electric resistance and rate characteristics can be improved.

In an embodiment, the full width at half maximum of the diffraction peak of the (111) plane (FWHM (111)) of the silicon particles may be 0.3 degree (°) to 7° as measured by X-ray diffraction using Cu Kα radiation. When the FWHM (111) of the Si particles is within this range, the lifespan characteristics of a battery including the negative electrode active material including the silicon particles can be improved. here, the X-ray diffraction measurement is performed using Cu Kα radiation as a target ray under measurement conditions of a 2θ range of 40° to 50°, a scan speed of 0.04 to 0.06°/s, and a step size of 0.01 to 0.03°/step.

The weight ratio of silicon nanoparticles to the amorphous carbon may be 8:2 to 2:8 or 7:3 to 5:5. In some embodiments where the silicon nanoparticles are present in the form of secondary particles formed by assembling the silicon nanoparticles in the negative electrode active material, the mixing ratio of the silicon nanoparticles and the amorphous carbon can also be seen as the mixing ratio of the secondary particles and amorphous carbon. When the mixing ratio of the silicon nanoparticles and the amorphous carbon falls within the above range, better capacity, particularly higher capacity, can be provided as compared to a crystalline carbon negative electrode active material.

The amorphous carbon may be present as a coating layer that coats the surfaces of the secondary particles. The amorphous carbon may also fill the gaps between primary particles in addition to the coating layer form. But, regardless of whether the amorphous carbon fills the gaps between primary particles, is present as a coating layer, or is present in any other form, the total amount of the amorphous carbon included in the negative electrode active material may be 20 to 80 wt% based on a total of 100 wt% of the negative electrode active material.

When the amorphous carbon is present as a coating layer that coats and surrounds the surfaces of the secondary particles, the amorphous carbon coating layer may have a thickness of 1 nm to 1000 nm, for example, 30 nm to 200 nm on the surfaces of the secondary particles. When the thickness of the amorphous carbon layer is within these ranges, the conductivity of the negative electrode active material can be improved. Further, an increase in resistance resulting from generation of side reaction products can be effectively suppressed due to reduced the contact with an electrolyte.

The negative electrode active material may have a particle diameter of 40 µm or less, for example, 2 µm to 15 µm. When the particle diameter of the negative electrode active material falls within this range, lithium ions can easily diffuse into the negative electrode active material and battery resistance and rate characteristics can be improved.

### Rechargeable lithium battery

Hereinafter, a rechargeable lithium battery is described. The rechargeable lithium battery includes a negative electrode including the negative electrode active material for the rechargeable lithium battery and a positive electrode.

The negative electrode may include a current collector and a negative electrode active material layer on the current collector. The negative electrode active material layer comprises the negative electrode active material for the rechargeable lithium battery as described above.

In a specific example, the negative electrode active material may comprise at least 95 wt%, for example, 95 to 100 wt%, of the total negative electrode active material within the negative electrode active material layer. In addition to the negative electrode active material (first negative electrode active material), the negative electrode active material layer may further comprise a different negative electrode active material (second negative electrode active material).

The negative electrode for a rechargeable lithium battery may include a current collector and a negative electrode active material layer on the current collector. The negative electrode active material layer may include a negative electrode active material and may further include a binder and/or a conductive material (e.g., an electrically conductive material). For example, the negative electrode active material layer may include about 90 wt% to about 99 wt% of the negative electrode active material, about 0.5 wt% to about 5 wt% of the binder, and about 0 wt% to about 5 wt% of the conductive material.

The negative active material includes the negative active material as described above. In specific examples, the negative active material may be included in an amount of 95 wt% or more, for example, 95 to 100 wt%, or 100 wt%, of the total negative active material in the negative active material layer.

The second negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy. In the formula Si-Q, Q is selected from among an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may include Sn, SnO₂, a Sn-based alloy, or a combination thereof.

The silicon-carbon composite may be a composite of silicon and amorphous carbon. In some embodiments, the silicon-carbon composite may be in a form of silicon particles with amorphous carbon coated on the surfaces of the silicon particles. For example, the silicon-carbon composite may include a secondary particle (core) in which primary silicon particles are assembled and an amorphous carbon coating layer (shell) on the surfaces of the secondary particles. The amorphous carbon may also be between the primary silicon particles. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder may serve to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause an undesirable chemical change in the rechargeable lithium battery and that conducts electrons can be used as the conductive material. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

### Positive electrode

A positive electrode for a rechargeable lithium battery may include a current collector and a positive electrode active material layer on the current collector. The positive electrode active material layer may include a positive electrode active material and may further include a binder and/or a conductive material. The positive electrode may further include an additive that can serve as a sacrificial positive electrode.

The positive electrode active material may include a compound (lithiated intercalation compound) that is capable of intercalating and deintercalating lithium. Specifically, at least one of a composite oxide of lithium and a metal selected from among cobalt, manganese, nickel, and combinations thereof may be used.

The composite oxide may be a lithium transition metal composite oxide. Examples of the composite oxide include lithium nickel-based oxide, lithium cobalt-based oxide, lithium manganese-based oxide, lithium iron phosphate-based compound, cobalt-free nickel-manganese-based oxide, or a combination thereof.

As specific examples, the following compounds represented by any one of the following Chemical Formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐN_{11-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹aGₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8). In these chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material. Based on 100 mol% of the metal excluding lithium in the lithium transition metal composite oxide, the high nickel-based positive electrode may have a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. The high-nickel-based positive electrode active material may be capable of providing high capacity and can be used in a high-capacity, high-density rechargeable lithium battery.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause an undesirable chemical change in the rechargeable lithium battery and conducts electrons can be used as the conductive material in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Aluminum may be used as the current collector, but the present disclosure is not limited thereto.

The rechargeable lithium battery may further include an electrolyte solution. The electrolyte solution may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may further include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more. In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of a polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer. The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and the inorganic material may be mixed in one coating layer, or a coating layer including an organic material and a coating layer including an inorganic material may be stacked.

The rechargeable lithium battery may be cylindrical, prismatic, pouch, or coin-type batteries, and the like depending on its shape.

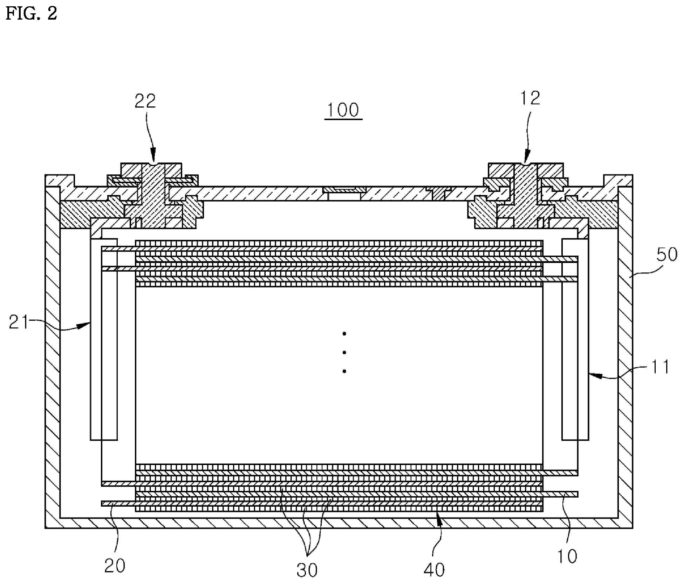

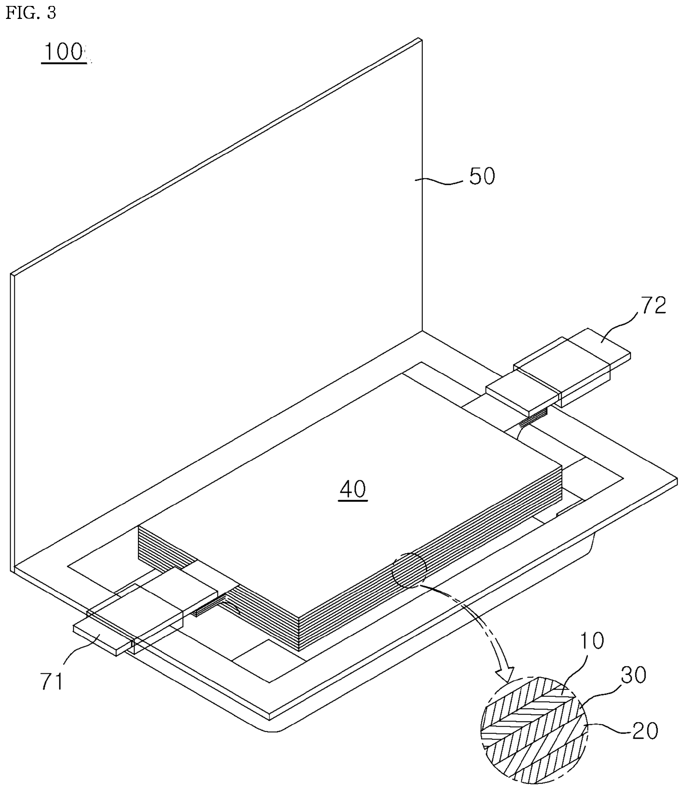

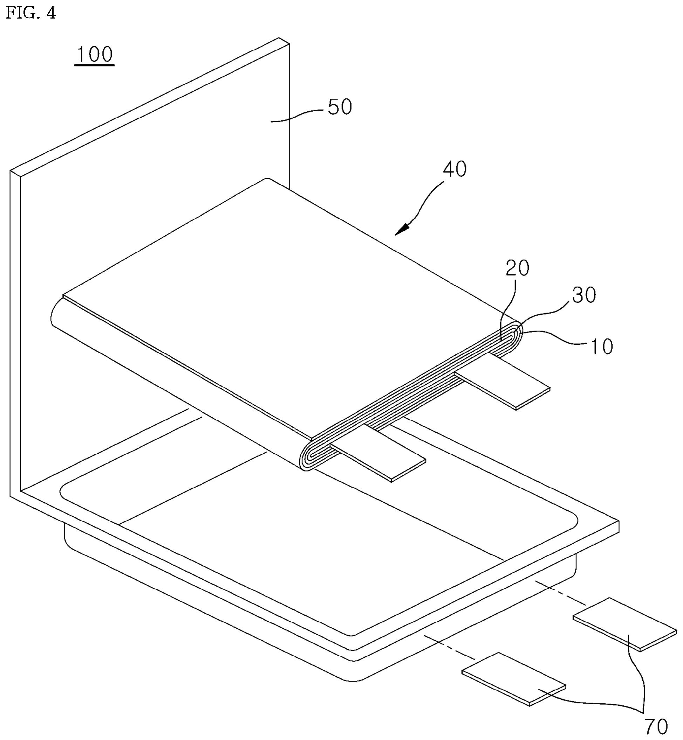

FIGS. 1 to 4 are schematic views of rechargeable lithium batteries according to embodiments of the present disclosure. FIG. 1 shows a cylindrical battery, FIG. 2 shows a prismatic battery, and FIGS. 3 and 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. As shown in FIG. 1, the rechargeable lithium battery 100 may include a sealing member 60 sealing the case 50. As shown in FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 may include an electrode tab 70, which may be, for example, a positive electrode tab 71 and a negative electrode tab 72 forming an electrical path for inducing the current formed in the electrode assembly 40 to outside of the battery.

A rechargeable lithium battery according to embodiments of the present disclosure may be used in automobiles, mobile phones, and/or various types of electric devices, as non-limiting examples.

Hereinafter, examples and comparative examples of the present disclosure will be described. However, the following examples are merely presented to exemplify the present disclosure, and the present disclosure is not limited to the following examples.

### Example 1

n-Hexane and silicon precursor particles (average size D50: about 1 µm) were mixed in a weight ratio of 90: 10, and the resulting mixture was input into a bead mill with zirconium balls and milled for a milling time of 12 hours to prepare a silicon nanoparticle dispersion. The viscosity at 25 °C of n-hexane was 0.5 mPa·s as measured using a Brookfield rotational viscometer. The prepared dispersion was spray-dried at 100 °C to prepare silicon secondary particles in which silicon nanoparticles were assembled. The prepared silicon secondary particles and mesophase pitch were mixed in a weight ratio of 95.5:4.5 and thermally treated under an N₂ atmosphere at 900 °C for 1 hour to obtain a product. The obtained product was pulverized to obtain a pulverized product, and the obtained pulverized product and mesophase pitch (i.e. amorphous carbon) were mixed in a weight ratio of 99.5:0.5 and thermally treated under a nitrogen atmosphere at 900 °C for 1 hour to prepare a negative electrode active material.

The negative electrode active material was a silicon-carbon composite including a core including silicon nanoparticles and amorphous carbon. An amorphous carbon coating layer surrounded the core. The negative electrode active material included the silicon nanoparticles and the amorphous carbon in a weight ratio of 90: 10 based on a total of 100 parts by weight of the silicon nanoparticles, and the amorphous carbon and had an average size D50 of 10 µm.

97.5 wt% of the prepared negative electrode active material and 2.5 wt% of a (meth)acrylic binder (copolymer of acrylic acid and acrylonitrile) and styrene butadiene rubber (SBR) (1.5 wt% and 1 wt% respectively) as binders were mixed in distilled water to prepare a negative electrode active material slurry. The negative electrode active material slurry was applied onto copper foil, dried, and then roll-pressed to make a negative electrode. A half-cell battery was made using the negative electrode, a lithium metal counter electrode, and an electrolyte. The electrolyte was a mixed solvent (3:7 volume ratio) of ethylene carbonate and dimethyl carbonate in which 1M LiPF₆ was dissolved.

### Example 2

A negative electrode active material and a battery were made in the same manner as in Example 1 except that milling was performed for 16 hours.

### Comparative Example 1

A negative electrode active material and a battery were made in the same manner as in Example 1 except that isopropanol (viscosity at 25 °C: 1.9 mPa·s) was used as a milling solvent.

### (Experiment 1) Evaluation of negative electrode active material

Oxygen concentration (units: %) of negative electrode active material: The oxygen concentration of the negative electrode active material was evaluated using a CS-d analyzer from Eltra GmbH by measuring an oxygen content from the CO₂ amount generated when the active material was thermally treated.

### (Experiment 2) Evaluation of battery characteristics

The manufactured half-cell batteries were charged and discharged at 0.1C, and charge/discharge capacities were measured. The measured discharge capacity was divided by the amount of the negative electrode active material to calculate specific capacity, and charge/discharge efficiency (discharge capacity/charge capacity ratio) was measured.

The half-cell batteries were subjected to one cycle of charging at a constant current (CC) of 0.2 C and a constant voltage (CV) and discharging at 0.2 C, one cycle of charging at a constant current (CC) of 0.5 C and discharging at 0.2 C, one cycle of charging at a constant current (CC) of 1 C and discharging at 0.2 C, and one cycle of charging at a constant current (CC) of 2 C and discharging at 0.2 C, and charging characteristics were calculated. In this case, charging was performed under conditions of a constant current (CC) section with a 10mV cut-off and a constant voltage (CV) section with a cut-off time of 15 hours, and discharging was performed under a 1.5V cut-off condition. Charging characteristics at each C-rate was measured. The charging characteristic result was represented as the ratio of 2 C CC charge capacity to 0.2 C CC charge capacity.

**Table 1**

| | Milling solvent | | Milling time (hours) | Silicon nanoparticle D50 (nm) | Oxygen concentration (%) | Specific capacity (mAh/g) | Efficiency (%) |
|---|---|---|---|---|---|---|---|
| | Type | Viscosity (mPa·s) | | | | | |
| Example 1 | n-Hexane | 0.5 | 12 | 100 | 10 | 1633 | 88.9 |
| Example 2 | n-Hexane | 0.5 | 16 | 95 | 10 | 1590 | 88.6 |
| Comparative Example 1 | Isopropanol | 1.9 | 22 | 110 | 16.0 | 1585 | 88.5 |

| | | | | | | | |
|---|---|---|---|---|---|---|---|
| *Silicon nanoparticles: silicon nanoparticles prepared by milling. | | | | | | | |

As shown in Table 1, the negative electrode active materials of the examples exhibited a low oxygen concentration and could be prepared with a shortened milling time.

According to embodiments of the present disclosure, there is provided a method of preparing a negative electrode active material for a rechargeable lithium battery that has improved processability by shortening the milling time of silicon precursor particles for preparing silicon nanoparticles. According further embodiments of the present disclosure, there is provided a negative electrode active material for a rechargeable lithium battery that improves battery capacity due to having a low oxygen concentration, which results from shortened milling time of silicon in preparation of silicon nanoparticles.

Exemplary embodiments of the present disclosure have been described, but the present disclosure is not limited thereto..

## Claims

1. A negative electrode active material for a rechargeable lithium battery (100), the negative electrode active material comprising:
a silicon-carbon composite including silicon nanoparticles and amorphous carbon,
wherein the silicon-carbon composite has an oxygen content of 10% or less, and
wherein the silicon nanoparticles have a D50 average size of 10 to 200 nm.

2. The negative electrode active material of claim 1, wherein the negative electrode active material includes (i) a core including the silicon nanoparticles and the amorphous carbon and (ii) an amorphous carbon coating layer surrounding the core and including the amorphous carbon.

3. The negative electrode active material of claim 1 or 2, wherein the amorphous carbon is soft carbon, hard carbon, mesophase pitch carbide, calcined coke, or a combination thereof.

4. The negative electrode active material of any of the claims 1 to 3, wherein a weight ratio of the silicon nanoparticles to the amorphous carbon is 80:20 to 20:80 based on a total of 100 parts by weight of the silicon nanoparticles and the amorphous carbon in the negative electrode active material.

5. The negative electrode active material of any of the claims 1 to 4, wherein the negative electrode active material has a D50 average size of 2 µm to 15 µm.

6. A method of preparing a negative electrode active material for a rechargeable lithium battery (100), the method comprising:
preparing silicon nanoparticles; and
mixing the silicon nanoparticles or an assembly of the silicon nanoparticles with an amorphous carbon precursor and performing thermal treatment,
wherein the preparation of silicon nanoparticles includes milling silicon precursor particles in a solvent having a viscosity of 0.1 to 0.5 mPa·s at 25 °C, whereby preferably the solvent is n-hexane

7. The method of claim 6, wherein a weight ratio of the solvent to the silicon precursor particles is 70:30 to 95:5 based on a total of 100 parts by weight of the solvent and silicon precursor particles.

8. The method of claim 6 or 7, wherein the milling is performed at 20 to 35 °C for 10 to 25 hours.

9. The method of any of the claims 6 to 8, wherein the silicon nanoparticles have a D50 average size of 10 to 200 nm.

10. The method of any of the claims 6 to 9, wherein the mixing of the silicon nanoparticles or the assembly of the silicon nanoparticles with the amorphous carbon precursor and the thermal treatment are performed two or more times.

11. The method of any of the claims 6 to 10, further comprising:
primarily mixing the silicon nanoparticles or the assembly of the silicon nanoparticles with the amorphous carbon precursor and performing thermal treatment; and
secondarily mixing the product prepared by the primary mixing and thermal treatment with the amorphous carbon precursor and performing thermal treatment.

12. The method of any of the claims 6 to 11, wherein in the primary mixing and thermal treatment:
(i) a weight ratio of the silicon nanoparticles or the assembly of the silicon nanoparticles to the amorphous carbon precursor is 20:80 to 99:1 based on a total of 100 parts by weight of the silicon nanoparticles and amorphous carbon precursor, and
(ii) the thermal treatment is performed under a nitrogen atmosphere at 400 °C to 1200 °C.

13. The method of any of the claims 6 to 12, wherein in the secondary mixing and thermal treatment:
(i) a weight ratio of the pulverized product prepared by the primary mixing and thermal treatment to the amorphous carbon precursor is 20:80 to 99.9:0.1 based on a total of 100 parts by weight of the pulverized product and the amorphous carbon precursor, and
(ii) the thermal treatment is performed under a nitrogen atmosphere at 400 °C to 1200 °C.

14. A rechargeable lithium battery (100) comprising:
a negative electrode (20) including the negative electrode active material for a rechargeable lithium battery (100) according to any of the claims 1 to 5; and
a positive electrode (10).

15. A rechargeable lithium battery (100) comprising:
a negative electrode (20) including the negative electrode active material for a rechargeable lithium battery (100) prepared by the preparation method of any of the claims 6 to 13; and
a positive electrode (10).
